# EUROPEAN PATENT SPECIFICATION

(11) **EP 1 998 900 B1**
(45) Date of publication and mention of the grant of the patent: **13.06.2012**
(21) Application number: 07716063.8
(22) Date of filing: 15.03.2007
(51) Int. Cl.: B05B 15/04, B65G 17/40, B65G 23/06, B65G 23/10

(54) **AN APPARATUS FOR MASKING, A METHOD OF MANUFACTURING THE APPARATUS AND USE THEREOF**
ABDECKVORRICHTUNG, VERFAHREN ZUR HERSTELLUNG DER VORRICHTUNG UND VERWENDUNG DAVON
APPAREIL DE MASQUAGE, PROCÉDÉ DE FABRICATION DE L'APPAREIL ET SON UTILISATION

(30) Priority: 20.03.2006 SE 0600624
(43) Date of publication of application: 10.12.2008
(73) Proprietor: HangOn AB, 330 33 Hillerstorp (SE)
(72) Inventor: TÖREFORS, Jakob, S-331 95 Värnamo (SE)
(74) Representative: Jacobsson, Peter
(86) International application number: PCT/SE2007/000250
(87) International publication number: WO 2007/108740

(56) References cited:
- EP-A1- 0 480 066
- EP-A1- 0 482 202
- EP-A2- 0 400 669
- WO-A1-2004/007088
- DE-A1- 10 211 121
- GB-A- 618 597
- JP-U- 1 148 760
- US-A- 3 474 894
- US-A1- 2005 221 055
- DATABASE WPI Week 199551, Derwent Publications Ltd., London, GB; Class P42, AN 1995-399987 & JP 07 276 154 A (TOPY KOGYO KK) 24 October 1995

## Description

### TECHNICAL FIELD

The present invention relates to an apparatus for masking holes and/or projections on painting or other surface treatment, comprising a strip-shaped carrier on which masking devices are disposed, wherein the carrier is manufactured in one piece with the masking devices, and is sectioned, with one masking device and one gripping member per section for advancement, grasping, orientation, insertion, and removal of the masking device, where there are holes or recesses in the carrier between adjacent gripping members for advancement of the carrier.

The present invention also relates to a method of manufacturing an apparatus according to the foregoing, a continuous series of masking devices with associated strip-shaped carriers being manufactured, by casting or injection moulding whereafter a further continuous series is manufactured.

The present invention also relates to use of an apparatus according to the foregoing.

### BACKGROUND ART

In painting, such as spray painting, or other surface treatment of objects, it is an often occurrence to mask screw holes, or other holes and pins or other projections in order to prevent surface treatment of those places where it is not desired, such as in threads or the like. Many masking devices, such as different types of sleeves or plugs, are intended to be handled manually, which is both a time-consuming and monotonous work. Thus, it is of major interest in the art to automate the handling of masking devices.

However, masking devices are often of one piece manufacture, which implies that, after manufacture, they are placed in a magazine with random orientation. The conversion of the masking devices from this state into a state where they are well-positioned and oriented is difficult per se to automate, since this places extremely high demands on recognition and gripping devices.

It is previously known in the art to position plugs on adhesive, elongate thin strips. The plugs are intended for closing off pipes and the like at their ends and are thus not intended to be removed again. The open pipe end is placed in register with the impression device which presses the plug into the pipe. No actual handling of the plug, apart from the impression operation, is thus relevant in this context.

WO 2005/009625 discloses the masking of holes with the aid of a "stack" of conical masking plugs that are hollow and partly insertable in one another. The outermost plug is passed into a hole which is to be masked, whereafter the rest of the stack is withdrawn and separated from the inserted plug. Thereafter, the stack is moved further to another hole where the currently outermost plug is inserted and the remaining plugs are separated from the inserted plug. The masking plugs are intended to shrink and fall off when they have fulfilled their function, typically when heating takes place, for example in connection with powder spraying.

The drawbacks in these disclosures are numerous. For example, heating is required for the masking plugs to shrink, which may possibly not take place to a sufficiently high degree or at a suitable point in time in the surface treatment in question.

The inserted plugs must be adapted to be insertable in one another, which implies that only one size or type of masking plug can be grouped in one and the same stack- In addition, extremely stringent demands are placed on material properties and dimensioning of the plugs in order, on the one hand, for them to be able to fit into and remain in position in holes as intended, and, on the other hand, in order that the plugs release from one another at a suitable place, i.e. in the transition between the outermost, inserted plug and the remaining plugs in the stack. Finally, the plugs included in the stack must be manufactured one by one and thereafter united together in the stacks, which ought not be excessively long. Consequently, manufacture and storage of this type of masking plug is of necessity complicated.

JP-1-148760 U discloses more examples of masking plugs, which are disposed end-to-end or side by side. The masking plugs are in some examples united by relatively thin threads of material between them.

EP 0482202 A1 discloses still more examples of masking plugs which are arranged end-to-end or side by side in a sequence.

WO 2004/007088 A1 discloses a masking material in the form of an elongate strip. The masking material is provided with a surface pattern.

US 2005/00221055 A1 discloses a masking material which consists of a panel with grooves to divide it into a number of unit blocks. The material may be snapped into smaller pieces along the grooves.

### PROBLEM STRUCTURE

There is thus a need in the art to provide automated masking, at the same time as handling and manufacture of the masking devices is simple.

### SOLUTION

The objects forming the basis of the present invention will be attained if the apparatus intimated by way of introduction is characterised in that indications of fracture are provided in the carrier, transverse to its extension, above and below the holes or recesses therein, in which a separator device will engage for forming with a cut the gripping members from the carrier.

Regarding the manner of manufacture, the objects of the present invention will be attained if the one end of the first-mentioned series is joined together with one end of a subsequent series into one long, continuous strip-shaped carrier.

Regarding use according to the present invention, the objects of the invention will be attained if each respective gripping member is grasped by a gripper before being separated from the elongate strip-shaped carrier by a separator device.

Further advantages will be attained if the present invention is moreover characterised by one or more of the features as set forth in appended Claims 2 to 6, 8 to 10 and 12 to 13, respectively.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: i s a perspective view of an apparatus for masking, while in use;
- Fig. 2: is a close-up in perspective of a part of the apparatus according to Fig. 1, but seen from a slightly different angle;
- Fig. 3: is a perspective view of a magazine for the masking apparatus; and
- Fig. 4: is a perspective view of a part of the apparatus according to the present invention during one phase in its manufacture.

### DESCRIPTION OF PREFERRED EMBODIMENT

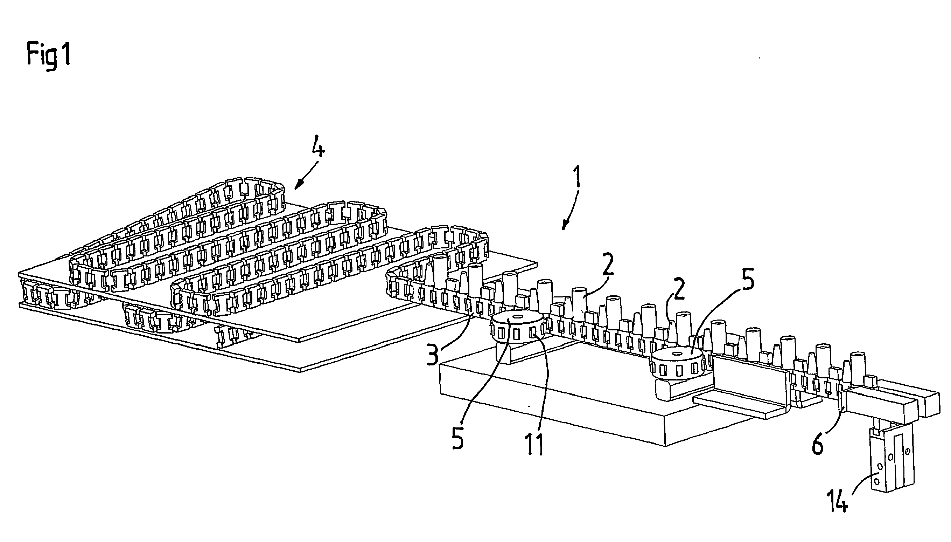

Fig. 1 broadly shows an apparatus for masking according to the invention. The apparatus 1 comprises a large number of masking devices 2 in the form of plugs or sleeves. Each one of the masking devices 2 is disposed on an elongate strip or carrier 3, preferably in one piece therewith. The carrier 3 and the masking devices 2 are advanced for use from a magazine 4. Advancement is carried out by tandem-disposed advancement devices 5 in the form of wheels so that the foremost masking device 2 is positioned in front of a separator device 6 where separation of this masking device 2 takes place from the elongate carrier 3. In connection with the separation, the separated part of the carrier 3 is grasped by a gripper 14.

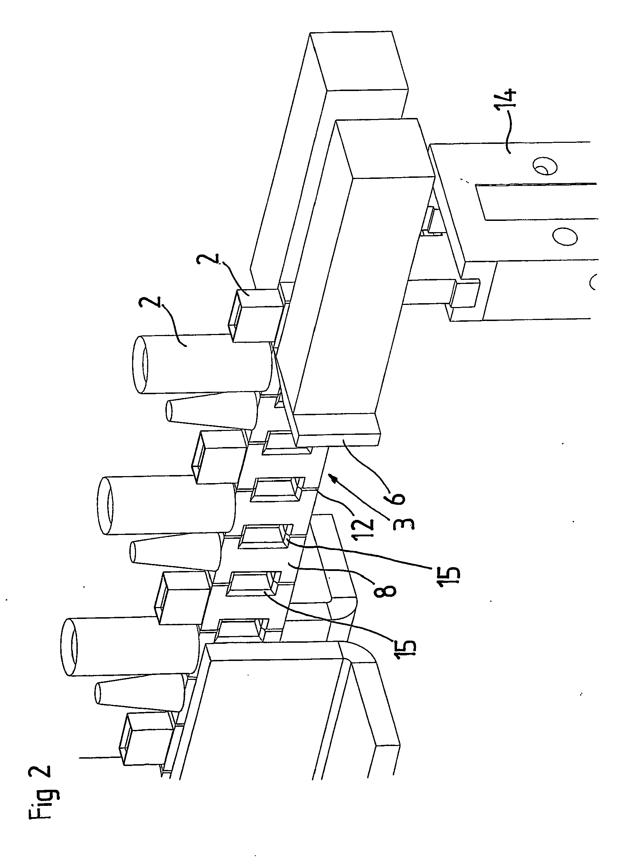

Fig. 2 shows the masking devices 2 in close-up. In the Figure, the masking devices 2 are in three different versions, namely conical, cylindrical and also in the form of a right-angled prism. Depending on the field of application, all of the masking devices 2 could, however, be identical. The intention with providing different masking devices in sequence after one another and repeating this sequence a large number of times on the elongate carrier 3, is that an object which displays a plurality of different types of holes or projections which are to be masked may be given complete masking in one and the same operation, if the holes or the projections are always masked in the same sequence. Thus, the masking operation may readily be automated even if the holes or projections require different types of maskings. Only one dispenser apparatus is required for masking all types of holes.

The masking devices 2 shown in the Figure are preferably provided with an inner cavity open towards the end so that they function for both masking of holes and projecting pins or the like. However, it is possible to make the masking devices solid. Nor need the cross-sectional configuration of the inner cavity of necessity correspond to the outer cross-sectional configuration. A masking device 2 with a rectangular outer contour could be provided with a cavity which has a circular cross section, and vice versa. However, it should be observed that the positioning of a masking device 2 with a circular cross section is somewhat easier, since it needs no precision in the rotational direction. Correspondingly, the positioning of conical or otherwise tapering masking devices 2 is quite simple, since the shape of the masking device 2 affords a certain guiding function.

The material in the masking devices 2 is preferably a rather soft formable material, which is sufficiently rigid to permit a guidable insertion in holes or onto projections which are to be masked, but at the same time sufficiently soft to be able to be compressed and thereby accommodate minor differences in dimensioning or positioning. Suitable materials are ideally polymer materials in general, such as PVC, TPG, neoprene, silicon rubber and similar materials, in particular of a rubber-like character.

In all Figures can clearly be seen the strip -Shaped carrier 3 on which the masking devices 2 are disposed on its edge. As was previously mentioned, the strip or the carrier 3 is elongate in order to make for advancement in an unbroken sequence of a large number of masking devices 2 without a new carrier 3 needing to be loaded into the dispenser. The carrier 3 is provided with a number of through-holes 7 or alternatively recesses. These holes 7 or recesses are usable for the advancement of the carrier 3 with the masking devices 2 disposed thereon, with the aid of the advancement devices 5. The holes 7 also facilitate separation, since the separator device 6 need not cut through such great quantities of material, in other words the holes 7 function in themselves as an indication of fracture. Moreover, the presence of the holes 7 or the recesses increases the flexibility of the carrier 3, since a pivot function is obtained in line with each hole 7. This flexibility is utilised particularly in connection with storage in the magazine 4. Finally, the holes 7 or recesses entail a saving in materials,

Above and below the holes 7, there are provided specific indications of fracture 12 in which the separator device 6 will engage with the carrier 3. The material which remains of the carrier 3 after the separation forms a gripping member 8. In the preferred embodiment, each gripping member is approximately of the shape of an I. The strip shape entails that the gripping member 8 is flat and well-suited to be grasped by the gripper 14. At the same time, the masking device 2 is non-rotationally disposed on the gripping member 8 so that the orientation of the masking device 2 is known when the gripping member 8 has been grasped by the gripper 14. The strip shape and the holes 7 between the gripping members 8 to be separated contribute to the positioning and orientation being well-known in all directions, since the holes 7 afford support in the lateral direction to the gripper 14. Moreover, bevels 15 facilitate the guiding of the gripper 14 which may similarly be provided with corresponding bevels.

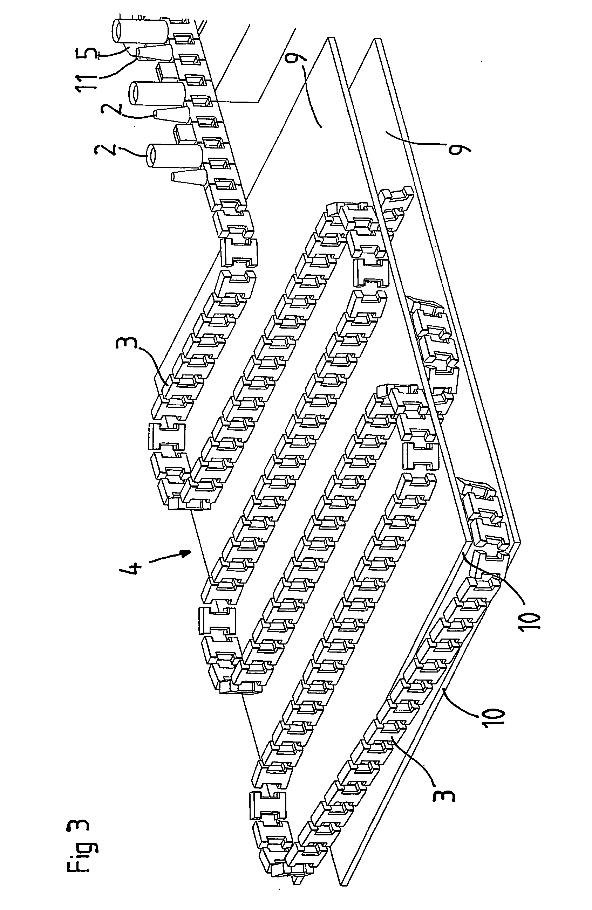

Fig. 3 shows a magazine 4 from which the carrier 3 with the masking devices 2 is advanced by the advancement devices 5. For purposes of clarity, the masking devices 2 have been omitted from that part of the carrier 3 which is located in the magazine 4. The magazine 4 includes a series of panels of, for example, paperboard, wood or sheet metal on which a single layer of the carrier 3 rests. The carrier 3 is disposed in folded form on each respective panel 9. The folded form is in zigzag or sinusoidal form with gentle curves and, for purposes of clarity, has been shown as quite loose in Fig. 3, while as tight a curving of the carrier 3 as possible is of course to be preferred, since this saves space. At the end walls 10 of the panels 9, the carrier 3 is transferred from one panel to another. Thus, a continuous carrier 3 may be longer than that which is accommodated on a single panel 9. A magazine 4 which houses a large number of panels 9 may thus accommodate a considerable strip length and a large number of masking devices. This implies that a replenishment of the magazine 4 and switching to a new carrier 3 only need take place at relatively long intervals. In order for the carrier 3 not to become tangled, it is an advantage, on the one hand if the panels 9 are removed in sequence when they are emptied and, on the other hand, if the magazine 4 is twisted half a turn when such removal takes place, so that the carrier 3 will always be drawn out from that end of the magazine which lies most proximal the advancement devices 5.

The magazine 4 may naturally have completely different forms or shapes, such as a coil or a reel on which the carrier 3 is disposed.

While the apparatus according to Figs. 1 to 3 is in use, the carrier 3 with the masking devices 2 is fed forwards by the advancement devices 5 which comprise at least one pair of wheels with projections 11 which fit into the holes or recesses 7 in the carrier 3 so that the carrier may be driven forwards when the wheels 5 rotate. The advancement may also be put into effect by means of other advancement devices than the wheels 5, for example with the aid of strips provided with projections or by pincer feed.

The advancement is suitably put into effect stepwise, so that one masking device 2 at a time is advanced up to the position in front of the separator device 6. Before the separator device 6 separates the gripping member 8 from the carrier 3, the gripper 14 also has time to grasp the gripping member 8. Thereafter, the carrier 3 is advanced forwards a further step so that a new masking device 2 with associated gripping member 8 may be separated. The carrier 3 is surrounded, on its way towards the separator device, by supporting means and guides which, for purposes of clarity, have been omitted from Figs. 1 and 2.

The separation operation is shown particularly clearly in Fig. 2 and the separator device 6 includes a sharp edge, e.g. in the form of a knife or scissor blade which engage at the indication of fracture 12 provided in the carrier. The direction of movement of the separator device 6 is transverse in relation to the longitudinal direction of the carrier 3, regardless of how this is oriented.

As was mentioned previously, the gripper 14 grasps the gripping member 8 just before the separator device 6 has separated it from the carrier 3. By such means, the risk is avoided that the masking device 2 with its associated gripping member 8 is dropped. Since the position of the masking device 2 and its orientation are well known when the masking device arrives at the separator device 6, this implies that the position and orientation arc also known when the gripper 14 has grasped the gripping member 8. From this position, the gripper 14 may execute movements which, on the one hand, displace the masking device 2 to another position in space and, on the other hand, turn or twist it so that it has a different orientation. The new position and the new orientation prepare the masking device 2 for insertion into a hole or positioning on a pin which is to be masked. The gripper 14 may alternatively include gripping means which are previously known in the art, for example suction cups or a gripping jaw.

The masking operation proper, i.e. the placing of the masking devices 2 in the holes which are to be masked or on the projections which are to be masked, respectively, takes place with the aid of the movable gripper. Since the masking device 2 is collected by the gripper 14 at a place which is well-defined, and its orientation is likewise equally well-defined, the positioning of the masking device 2 may be carried out with the aid of an industrial robot in accordance with known technology -

The carrier 3 may carry mutually identical masking devices 2 and then operate for masking substantially the same size or size range of holes and also for masking projections if their thickness keeps within the same size range and on condition that the masking device 2 is hollow. When masking of a plurality of different hole sizes or shapes, or alternatively sizes and shapes of projections, two or more different types of masking devices will be required for one and the same product. Such products may nevertheless be masked in a single procedure and with one and the same masking apparatus, on condition that the different types of masking devices 2 are placed out on the carrier 3 in the number and in the sequence required for rapid and efficient masking of a product. The sequence of masking devices 2 which is suitable for masking a product is thereafter repeated periodically on the carrier 3, so that a long series of products may be masked after one another in an automatic process. In order for such an adaptation of the carrier 3 and the masking devices 2 carried thereon to be economically viable, it is nevertheless necessary that the manufacturing series are sufficiently long for such an adaptation of the masking apparatus 1 to be profitable. However, against these costs the fact must be taken into consideration that either a plurality of masking devices after one another mask different types of holes or projections, or alternatively that manual masking must be put into effect of certain of the holes or projections.

On use of the masking apparatus 1, an automatic process is advantageously also employed for removing the masking devices 2 after completed surface treatment. In such instance, use is made of the gripping members 8 for realising an engagement by a gripper which pulls the masking devices 2 loose from the product in a manner analogous with how they were applied. Naturally, it is also possible to remove the masking devices manually, if desired.

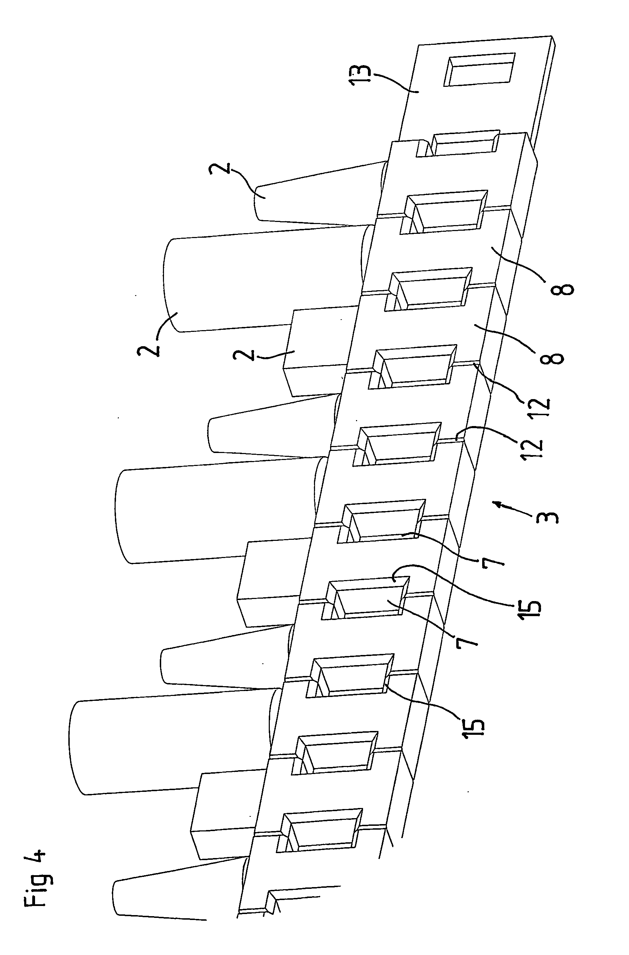

Manufacture of the masking apparatus 1 is carried out according to the preferred embodiment in series or segments which are of moderate length to be able to be accommodated in an injection moulding or casting tool. Such segments, which may accommodate one or more sequences of different masking devices 2 after one another must be united into one long, continuous carrier 3 which permits the effective, automated processing as was described earlier. In order to make this possible, there is provided as shown in Fig. 4, an anchorage device 13 at one end of carrier which has been cast or injection moulded. The anchorage device 13 is thinner than the gripping member 8 and the carrier 3 but has the same extent in the vertical direction as them. The anchorage device is further provided with holes or recesses 7 corresponding to those between the gripping members 8. On manufacture, the carrier 3 is displaced laterally so that only the anchorage device 13 will, right from the outset, be inserted in the tool for casting or injection moulding. The anchorage device 13 will therefore become an integral part in that section which is now cast, and a whole carrier 3 which has been extended by the length of the last-manufactured section is the result. Also this carrier has, at its outer end, a new anchorage device 13 which is ready for anchoring in the next carrier segment which is manufactured.

Depending on choice of material, other forms of interlinking of the different strip segments may be conceivable. For example, the carrier sections may be fused together or glued together so as to form one continuous carrier 3.

### DESCRIPTION OF ALTERNATIVE EMBODIMENTS

In the Figures, the strip-shaped carrier 3 has been shown as standing upright on edge. It should be understood that advancement, separation and gripping of the gripping member 8 with the masking device 2 disposed thereon would function just as well if the orientation of the carrier were different, for example turned through a ¼ of a revolution to a recumbent position or vertical with a feeding direction either straight upwards or straight downwards. The orientation of the magazine 4 may also be different from that in the preferred embodiment.

A further method of varying the invention is that the method of advancement and separation of the elongate carrier 3 takes place with the aid of an apparatus which is movable together with the gripper 14 which grips the gripping member 8 and places it where masking is to take place. Since the gripper 14 need not reciprocate any length between the separator device 6 and the site of the masking on the product, the tempo of automation can be raised even further.

The invention may be modified without departing from the scope of the appended Claims.

## Claims

1. An apparatus for masking of holes and/or projections in painting or other surface treatment, comprising a strip-shaped carrier (3) on which masking devices (2) are disposed, wherein the carrier (3) is manufactured in one piece with the masking devices (2), and is sectioned, with one masking device (2) and one gripping member (8) per section for advancement, grasping, orientation, insertion, and removal of the masking device (2), where there are holes (7) or recesses in the carrier (3) between adjacent gripping members (8) for advancement of the carrier (3), **characterised in that** indications of fracture (12) are provided in the carrier, transverse to its extension, above and below the holes (7) or recesses therein, in which a separator device will engage for forming with a cut the gripping members (8) from the carrier (3).

2. The apparatus as claimed in Claim 1, **characterised in that** there are levels (15) on the edges of the holes (7) or recesses in the carrier, for facilitating the advancement and grasping of the masking device (2).

3. The apparatus as claimed in Claim 1 or 2, **characterised in that** the masking devices (2) comprise a determined series of at least different types of masking devices (2), the series being repeated periodically for automatic masking in a sequence of different holes and projections on a product.

4. The apparatus as claimed in any of Claims 1 to 3, **characterised in that** the carrier (3) is disposed in a folded form on a plane (9), in a magazine, out of which the carrier (3) with the masking devices (2) is drawable.

5. The apparatus as claimed in any of Claims 1 to 4, **characterised in that** at least certain of the masking devices (2) taper at their front end for guiding into a hole,

6. The apparatus as claimed in any of Claims 1 to 5, **characterised in that** at least certain of the masking devices (2) have an inner cavity open towards the front end for masking of projections.

7. A method of manufacturing an apparatus as claimed in any of Claims 1 to 6, where a continuous series of masking devices (2) with associated strip-shaped carriers (3) is manufactured, by casting or injection moulding, whereafter a further continuous series is manufactured in the same way, **characterised in that** the one end of the first-mentioned series is joined together on manufacture with one end of the mutually subsequent series into one long, continuous strip-shaped carrier (3).

8. The method as claimed in Claim 7, **characterised in that** the joining operation is put into effect **in that** a portion of the first-manufactured series is cast or vulcanised in position at one end of the further series during manufacture thereof in an anchorage device (13) arranged at the end of the first series.

9. The method as claimed in Claim 7, **characterised in that** the joining operation takes place by means of gluing of the ends to one another.

10. The method as claimed in Claim 7, **characterised in that** the joining operation takes place by fusion of the ends.

11. Use, on masking of a series of holes, of an apparatus as claimed in any of Claims 1 to 6, **characterised in that** each respective gripping member (8) is grasped by a gripper before being separated from the elongate strip-shaped carrier (3) by means of a separator device (6).

12. Use as claimed in Claim 11, **characterised in that** the carrier (3) is advanced stepwise to the gripper and the separator device (6).

13. Use as claimed in Claim 11 or 12, **characterised in that** removal of the masking device (2) takes place by engagement with each respective gripping member (8).

## Patentansprüche

1. Vorrichtung zum Maskieren von Löchern und/oder Vorsprüngen beim Anstreichen oder einer anderen Oberflächenbehandlung, mit einem streifenförmigen Träger (3), auf dem Maskierungsvorrichtungen (2) angeordnet sind, wobei der Träger (3) einteilig mit den Maskierungsvorrichtungen (2) hergestellt ist und so in Abschnitte unterteilt ist, dass pro Abschnitt eine Maskierungsvorrichtung (2) und ein Greifelement (8) zum Vorwärtsbewegen, Ergreifen, Orientieren, Einsetzen und Entnehmen der Maskierungsvorrichtung (2) vorhanden sind, wobei in dem Träger zwischen benachbarten Greifelementen (8) Löcher (7) oder Aussparungen zum Vorwärtsbewegen des Trägers (3) vorhanden sind, **dadurch gekennzeichnet, dass** in dem Träger quer zu seiner Erstreckung oberhalb und unterhalb der darin vorhandenen Löcher (7) oder Aussparungen Bruchstellenangaben (12) vorgesehen sind, in die eine Trennvorrichtung eingreift, um mit einem Schnitt die Greifelemente (8) von dem Träger (3) zu bilden.

2. Vorrichtung nach Anspruch 1, **dadurch gekennzeichnet, dass** an den Rändern der Löcher (7) oder Aussparungen im Träger Stufen (15) vorhanden sind, um das Vorwärtsbewegen und Greifen der Maskierungsvorrichtung (2) zu erleichtern.

3. Vorrichtung nach Anspruch 1 oder 2, **dadurch gekennzeichnet, dass** die Maskierungsvorrichtungen (2) eine bestimmte Reihe zumindest aus verschiedenen Typen von Maskierungsvorrichtungen (2) umfassen, wobei die Reihe für eine automatische Maskierung in einer Folge verschiedener Löcher und Vorsprünge auf einem Produkt periodisch wiederholt ist.

4. Vorrichtung nach einem der Ansprüche 1 bis 3, **dadurch gekennzeichnet, dass** der Träger (3) in gefalteter Form auf einer Ebene (9) in einem Magazin angeordnet ist, aus dem der Träger (3) mit den Maskierungsvorrichtungen (2) gezogen werden kann.

5. Vorrichtung nach einem der Ansprüche 1 bis 4, **dadurch gekennzeichnet, dass** zumindest bestimmte Maskierungsvorrichtungen (2) an ihrem vorderen Ende konisch zulaufen, um in ein Loch zu führen.

6. Vorrichtung nach einem der Ansprüche 1 bis 5, **dadurch gekennzeichnet, dass** zumindest bestimmte Maskierungsvorrichtungen (2) einen inneren Hohlraum besitzen, der zum vorderen Ende offen ist, um die Vorsprünge zu maskieren.

7. Verfahren zum Herstellen einer Vorrichtung nach einem der Ansprüche 1 bis 6, wobei eine ununterbrochene Reihe von Maskierungsvorrichtungen (2) mit zugeordneten streifenförmigen Trägern (3) durch Gießen oder Spritzguss hergestellt wird, wobei eine weitere ununterbrochene Reihe auf die gleiche Weise hergestellt wird, **dadurch gekennzeichnet, dass** das eine Ende der erstgenannten Reihe bei der Herstellung mit einem Ende der darauf folgenden Reihe in einem langen, ununterbrochenen streifenförmigen Träger (3) verbunden wird.

8. Verfahren nach Anspruch 7, **dadurch gekennzeichnet, dass** der Verbindungsvorgang dadurch erfolgt, dass ein Abschnitt der zuerst hergestellten Reihe an einer Position an einem Ende der weiteren Reihe während ihrer Herstellung in einer am Ende der ersten Reihe angeordneten Verankerungsvorrichtung (13) gegossen oder vulkanisiert wird.

9. Verfahren nach Anspruch 7, dadurch gekenntzeichnet, dass der Verbindungsvorgang durch Verkleben der Enden miteinander erfolgt.

10. Verfahren nach Anspruch 7, **dadurch gekennzeichnet, dass** der Verbindungsvorgang durch Verschmelzen der Enden erfolgt.

11. Verwendung bei der Markierung einer Reihe von Löchern einer Vorrichtung nach einem der Ansprüche 1 bis 6, **dadurch gekennzeichnet, dass** jedes entsprechende Greifelement (8) durch einen Greifer ergriffen wird, bevor es von dem lang gestreckten streifenförmigen Träger (3) mittels einer Trennvorrichtung (6) getrennt wird.

12. Verwendung nach Anspruch 11, **dadurch gekennzeichnet, dass** der Träger (3) zu dem Greifer und der Trennvorrichtung (6) schrittweise vorwärts bewegt wird.

13. Verwendung nach Anspruch 11 oder 12, **dadurch gekennzeichnet, dass** die Entnahme der Maskierungsvorrichtung (2) durch Eingriff mit dem entsprechenden Greifelement (8) erfolgt.

## Revendications

1. Dispositif de masquage d'orifices et/ou de saillies lors de la peinture ou autre traitement de surface, comprenant un support en forme de bande (3) sur lequel des dispositifs de masquage (2) sont disposés, dans lequel le support (3) est fabriqué en une pièce avec les dispositifs de masquage (2), et est sectionné, avec un dispositif de masquage (2) et un élément de saisie (8) par section afin d'assurer le déplacement, la saisie, l'orientation, l'insertion, et le retrait du dispositif de masquage (2), dans lequel il est agencé des orifices (7) ou cavités sur le support (3) entre des éléments de saisie adjacents (8) destinés à assurer le déplacement du support (3), **caractérisé en ce que** des indications de fracture (12) sont formées sur le support, transversalement à son extension, au-dessus et au-dessous des orifices (7) ou cavités internes, dans lesquelles un dispositif de séparation est introduit afin de former une découpe sur les éléments de saisie (8) par rapport au support (3).

2. Dispositif selon la revendication 1, **caractérisé en ce qu'**il existe des plats (15) sur les bords des orifices (7) ou des cavités sur le support, afin de faciliter le déplacement et la saisie du dispositif de masquage (2).

3. Dispositif selon la revendication 1 ou 2, **caractérisé en ce que** les dispositifs de masquage (2) comprennent une série déterminée d'au moins différents types de dispositifs de masquage (2), la série étant répétée de manière périodique afin d'assurer le masquage automatique sur une séquence de différents orifices et saillies sur un produit.

4. Dispositif selon l'une quelconque des revendications 1 à 3, **caractérisé en ce que** le support (3) est disposé, sous une forme pliée, sur un plan (9), dans un magasin, hors duquel le support (3) avec les dispositifs de masquage (2) peut être retiré.

5. Dispositif selon l'une quelconque des revendications 1 à 4, **caractérisé en ce que** au moins certain des dispositifs de masquage (2) sont coniques au niveau de leur extrémité avant afin d'assurer le guidage dans un orifice.

6. Dispositif selon l'une quelconque des revendications 1 à 5, **caractérisé en ce que** au moins certain des dispositifs de masquage (2) présentent une cavité interne débouchant vers l'extrémité avant afin d'assurer le masquage de saillies.

7. Procédé de fabrication d'un dispositif selon l'une quelconque des revendications 1 à 6, dans lequel une série continue de dispositifs de masquage (2) avec des supports en forme de bande associés (3) est fabriquée, par moulage ou moulage par injection, après quoi une nouvelle série continue est fabriquée de la même manière, **caractérisé en ce que** la première extrémité de la première série mentionnée est reliée, lors de la fabrication, à une extrémité de la série mutuellement suivante en un support en forme de bande continu allongé (3).

8. Procédé selon la revendication 7, **caractérisé en ce que** l'opération de jonction est mise en oeuvre **en ce qu'**une partie de la première série fabriquée est moulée ou vulcanisée en position à une extrémité de la nouvelle série au cours de la fabrication de celle-ci sur un dispositif d'ancrage (13) agencé à l'extrémité de la première série.

9. Procédé selon la revendication 7, **caractérisé en ce que** l'opération de jonction est assurée par collage des extrémités l'une sur l'autre.

10. Procédé selon la revendication 7, **caractérisé en ce que** l'opération de jonction est réalisée par fusion des extrémités.

11. Utilisation, lors du masquage d'une série d'orifices, d'un dispositif selon l'une quelconque des revendications 1 à 6, **caractérisée en ce que** chaque élément de saisie respectif (8) est saisi par un dispositif de saisie avant d'être séparé du support en forme de bande allongé (3) au moyen d'un dispositif de séparation (6).

12. Utilisation selon la revendication 11, **caractérisée en ce que** le support (3) est avancé pas par pas vers le dispositif de saisie et le dispositif de séparation (6).

13. Utilisation selon la revendication 11 ou 12, **caractérisée en ce que** le retrait du dispositif de masquage (2) est assuré par couplage avec chaque élément de saisie respectif (8).
